(19) Europäisches Patentamt
European Patent Office
Office européen des brevets

(11) Numéro de publication: **0 291 422**
**A2**

(12) **DEMANDE DE BREVET EUROPEEN**

(21) Numéro de dépôt: **88420137.7**

(22) Date de dépôt: **22.04.88**

(51) Int. Cl.⁴: **C 08 F 2/44**
A 61 L 15/00, A 01 G 31/00

(30) Priorité: **28.04.87 FR 8706217**

(43) Date de publication de la demande:
**17.11.88 Bulletin 88/46**

(84) Etats contractants désignés:
**AT BE CH DE ES GB IT LI LU NL SE**

(71) Demandeur: **CONSERVATOME**
**F-01120 DAGNEUX MONTLUEL (FR)**

**Société COATEX, Société Anonyme**
**35 Cours Aristide Briand**
**F-69300 Caluire (FR)**

(72) Inventeur: **Jacquement, Christian**
**6 bis Avenue du Docteur Terver**
**F-69130 Ecully (FR)**

**Rousset, Jacky**
**Le Bourg Baneins**
**F-01400 Chatillon sur Chalaronne (FR)**

**Martineu, Pierre**
**67 Avenue du 8 mai 1945**
**F-69500 Bron (FR)**

**Saunier, Christiane**
**67 C Rue du Professeur Roux**
**F-69200 Venissieux (FR)**

(74) Mandataire: **Gaucherand, Michel**
**COATEX Département Propriété Industrielle 35, Cours Aristide Briand**
**F-69300 Caluire (FR)**

(54) **Composition polymère chargée en matière minérale pulvérulente à haute capacité d'absorption en eau.**

(57) Composition polymère se présentant sous une forme granulaire ayant la capacité d'absorber et de désorber de l'eau, comportant pour une part une matière polymère réticulée insoluble mais gonflable dans l'eau et pour l'autre part au moins une charge minérale pulvérulente, bien dispersée et intimement liée, caractérisée en ce que, dans le but d'augmenter sa capacité d'absorption et de désorption en eau, sa résistance à la photodégradation et sa durée de vie, elle se compose :

a) d'au moins un polymère et/ou copolymère préparé à partir d'au moins un monomère éthylénique insaturé disposant d'au moins une fonction carboxylique amide, sulfurique, sulfonique, phosphorique, phosphonique, hydroxyle,

b) d'au moins une charge minérale intimement dispersée au sein dudit polymère et/ou copolymère grâce à son introduction dans le mélange de monomères de même nature ou de nature différente avant leur polymérisation.

Cette composition manifeste une résistance améliorée à la photodégradation ainsi qu'une substantielle augmentation du nombre de cycles d'absorption et de désorption en eau et une capacité augmentée à absorber de l'eau pour chaque cycle et à la restituer lentement dans des milieux où lesdites compositions sont mises en oeuvre.



Bundesdruckerei Berlin

**Description**

**Composition polymère chargée en matière minérale pulvérulente à haute capacité d'absorption en eau.**

L'invention concerne une composition polymère chargée en matière minérale pulvérulente se présentant sous une forme granulaire insoluble mais gonflable dans l'eau, se composant d'au moins un polymère réticulé préparé à partir d'au moins un monomère éthylénique insaturé disposant d'au moins une fonction carboxylique, amide, sulfurique, sulfonique, phosphorique, phosphonique, hydroxyle et d'au moins une charge minérale inerte et pulvérulente bien dispersée et intimement liée à la matière polymère.

L'invention concerne également un procédé pour l'obtention de cette composition granulaire chargée.

Depuis longtemps déjà, la littérature spécialisée a publié de nombreuses formules de matières polymères particulaires associées à des charges minérales inertes ainsi que les procédés permettant de les produire.

Ces matières polymères particulaires se présentant sous la forme de grains gélatineux ou disposant d'une certaine élasticité ont, de manière bien connue, la propriété d'absorber plusieurs fois leur poids en eau quand elles sont mises en contact avec un milieu aqueux par immersion ou aspersion par exemple, et de restituer lentement l'eau absorbée quand les grains saturés sont incorporés dans un milieu de croissance des plantes.

Ainsi, l'absorption d'une grande quantité d'eau par ces matières polymères particulaires (incorporées à un milieu de croissance des plantes) lors de chutes de pluie ou d'arrosage artificiel, permet une restitution lente de l'eau accumulée dans le milieu environnant et, de ce fait, la création d'un milieu humide quasi permanent propice au développement des cultures.

De plus, les cycles d'absorption et de désorption en eau de ces matières polymères particulaires, provoquant des variations de leur volume apparent, favorisent par cet effet mécanique l'aération des milieux de croissance des plantes dans lesquels elles sont incorporées.

Enfin, les matières polymères particulaires à haut pouvoir d'absorption et de désorption d'eau ont également été décrites pour des applications agricoles associant à leur composition des engrais et/ou des agents biocides.

De telles matières polymères particulaires associées à des charges minérales inertes sont décrites dans le brevet français 2 173 934 et obtenues selon un procédé qui consiste à malaxer un mélange d'au moins un polymère hydrophile pulvérulent et hydrosoluble et d'une charge pulvérulente inerte dans le but de recouvrir la surface de contact dudit polymère, puis à soumettre ledit mélange en présence d'une certaine quantité d'eau à l'action d'un rayonnement ionisant pour réticuler le polymère.

Malgré tous les avantages que l'on peut concéder aux produits obtenus selon le procédé précité, les matières polymères particulaires associées à des charges minérales inertes manifestent certains inconvénients qui peuvent être considérés comme majeurs.

Un premier inconvénient majeur réside par exemple dans le fait que ces matières polymères particulaires sont formées d'un volume d'au moins un polymère constituant le noyau de chaque particule et d'une couche de matière minérale pulvérulente et inerte enrobant par collage les matières polymères particulaires (chaque particule de polymère), cette couche devant former un écran protecteur à l'égard du rayonnement ultra-violet naturel photodestructeur.

Or, la couche de matières minérales pulvérulentes adhérant par collage au noyau de la matière polymère particulaire peut être naturellement discontinue, laissant entre chaque particule de matières minérales des zones de matière polymère accessibles à l'action des photons destructeurs. Et, de plus, les cycles alternés des variations de volumes auxquels sont soumises les matières polymères particulaires peuvent provoquer une expulsion des particules minérales inertes adhérant plus ou moins fortement par collage (ou plus ou moins enchâssées) à la matière polymère, cycles qui rompent la couche minérale protectrice de ladite matière polymère, la rendant particulièrement sensible à la photodégradation par le rayonnement ultra-violet.

De plus, et comme le phénomène a été constaté, les matières polymères particulaires perdent au cours des cycles d'absorption et de désorption en eau une partie de leur capacité à se charger en eau, cette capacité diminuant d'autant plus rapidement que la matière polymère particulaire, perdant son écran protecteur, est sensible à la photodégradation, provoquant ainsi une disparition prématurée par destruction des matières polymères particulaires mises en oeuvre dans les milieux de croissance des plantes.

D'autres matières polymères particulaires associées à des charges minérales inertes sont également décrites par leurs compositions et par leurs procédés d'obtention dans le brevet EP 0 072 213. De telles compositions particulaires utiles comme additif pour les milieux de croissance des plantes comprennent des particules de gel consistant en un copolymère d'acrylamide et de sel d'acide (méth)acrylique dont le rapport molaire est d'au moins 70:30 mais non supérieur à 95:5, chimiquement réticulé de façon que la proportion de polymère soluble dans l'eau soit inférieure à 30% du poids du polymère sec, la surface externe desdites particules de gel étant modifiée au moyen d'un agent de mobilité hydrophile finement particulaire tel que du kaolin, de la terre à foulon, du talc, de la bentonite et du silicate d'aluminium.

Mais ces matières polymères particulaires réticulées chimiquement et associées à des charges minérales de revêtement manifestent les mêmes inconvénients majeurs que ceux constatés dans le document antérieurement évoqué.

Forte des inconvénients précités, la Demanderesse, poursuivant ses recherches, a trouvé et mis au point une composition polymère réticulée chargée en matière minérale pulvérulente se présentant sous une forme granulaire ayant simultanément les propriétés souhaitées et disposant d'une très forte capacité d'absorption

et de désorption en eau, d'une réelle résistance à la photodégradation et d'une durée de vie substantiellement améliorée ainsi qu'un procédé pour l'obtention de cette composition granulaire chargée.

La composition selon l'invention à très forte capacité d'absorption et de désorption en eau comportant pour une part une matière polymère réticulée insoluble mais gonflable dans l'eau et pour l'autre part au moins une charge minérale pulvérulente, bien dispersée et intimement liée, ladite composition se présentant sous la forme de granulats, se caractérise en ce qu'elle se compose :

a) d'au moins un polymère et/ou copolymère préparé à partir d'au moins un monomère éthylénique insaturé disposant d'au moins une fonction carboxylique amide, sulfurique, sulfonique, phosphorique, phosphonique, hydroxyle,

b) d'au moins une charge minérale intimement dispersée au sein dudit polymère et/ou copolymère grâce à son introduction dans le mélange de monomères de même nature ou de nature différente avant leur polymérisation.

Ainsi, alors que l'art antérieur décrit des compositions particulaires rétentrices d'eau, formées d'un noyau en matière polymère enrobé d'une couche de matière minérale pulvérulente, la composition selon l'invention se distingue grâce à une combinaison nouvelle par le fait que la matière polymère est formée d'au moins un polymère et/ou copolymère obtenu à partir de monomères spécifiques et que cette matière polymère n'est plus enrobée de la matière minérale mais la contient à coeur selon une dispersion homogène.

Le polymère et/ou copolymère selon l'invention résultant de la polymérisation de monomères précités de même nature ou de nature différente dispose d'une formule générale :

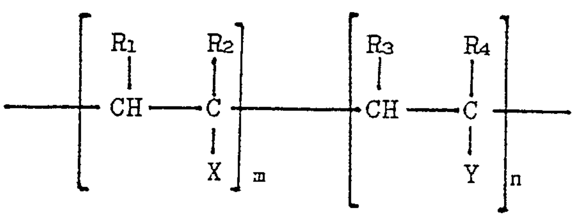

dans laquelle X et Y sont différents ou identiques et sont l'une des fonctions , -COOH, $-CONH_2$, $-O-SO_3H$, $-SO_3H$, $-O-PO_3H_2$, $-PO_3H_2$, -OH tandis que les indices m et n exprimés en pour cent en poids sont choisis dans les intervalles $0 \leqq m \leqq 100$ et $100 \leqq n \leqq 0$.

Selon l'invention, les radicaux $R_1$ et $R_3$ peuvent être choisis dans le groupe constitué par -H, -OH, -COOH et les alkyles substitués ou non, tandis que les radicaux $R_2$ et $R_4$ peuvent l'être dans le groupe constitué par -H, -COOH, $-CO-NH_2$, $-O-SO_3H$, $-SO_3H$, $-O-PO_3H_2$, $-PO_3H_2$, -OH et les alkyles substitués ou non.

D'une manière préférentielle, les radicaux $R_1$, $R_2$, $R_3$ et $R_4$, quand ils sont des alkyles substitués ou non, sont choisis parmi ceux ayant 1 à 4 atomes de carbone.

Parmi les monomères éthyléniques insaturés mis en oeuvre selon l'invention peuvent être cités, à titre d'exemples, les acides acrylique, méthacrylique, itaconique, crotonique, isocrotonique, aconitique, fumarique, mésaconique, sinapique, undécylénique, angélique, hydroxyacrylique, anhydride maléïque, l'acrylamide, le méthacrylamide, l'acide acrylamidopropane sulfonique, l'éther vinylique, l'acide vinyl sulfonique, l'alcool vinylique, l'acide styrène sulfonique, les acrylates et méthacrylates d'alkyles, acrylates et méthacrylates d'hydroxyalkyles, les esters phosphoriques d'acrylate ou méthacrylate hydroxylés tels que le phosphate de méthacrylate d'éthylène glycol, les esters sulfuriques d'acrylate ou méthacrylate hydroxylés.

Les fonctions acides précitées peuvent se présenter sous leur forme acide ou sous une forme salifiée par des agents à base de métaux monovalents ou assimilés tels que sodium, potassium, ammonium ou par des agents à base de métaux divalents tels que calcium, magnésium...

La charge minérale intimement dispersée au sein dudit polymère et/ou copolymère est généralement choisie parmi les composés argileux susceptibles de former une suspension plastique stable au contact de l'eau. Les composés peuvent appartenir aux groupes constitués par les kaolinites, telles que par exemple la kaolinite, la dickite, l'halloysite, les kaolinites désordonnées, les serpentines; le groupe des micas, tels que par exemple muscovite, biotite et paragonite, la pyrophyllite et le talc; les illites et la glauconite; le groupe des montmorillonites, telles que par exemple la bentonite, la béidellite, la stévensite, la saponite et l'hectorite; le groupe des chlorites; le groupe des vermiculites; le groupe des argiles interstratifiées dont la structure unitaire est une combinaison des groupes précédents; le groupe des argiles fibreuses, telles que par exemple l'attapulgite (polygorskite), la sépiolite.

Les composés argileux peuvent également contenir d'autres composés tels que par exemple le quartz, la calcite, la dolomie, le gypse, la limonite (FeO $(OH)_nH_2O$) et d'autres oxydes et hydroxydes métalliques.

La charge minérale intimement dispersée au sein du polymère et/ou copolymère est présente dans la composition à très forte capacité d'absorption et de désorption en eau selon l'invention dans le rapport pondéral : charge minérale / mélange de monomères (exprimé en sec) pouvant varier de 10/90 à 90/10 et préférentiellement de 50/50 à 20/80.

La composition polymère chargée en matières minérales pulvérulentes à très forte capacité d'absorption et de désorption en eau peut également contenir, outre les charges, d'autres agents connus très divers. C'est

ainsi que l'on peut introduire divers agents favorisant la réticulation chimique, des agents de stabilisation aux rayonnements ultra-violets, des dispersants, des colorants, des pigments, des agents biocides (herbicides, fongicides, nématicides, insecticides), des agents de conditionnement ou de mise en état des sols tels que les engrais.

La composition polymère chargée de matière minérale pulvérulente intimement dispersée en son sein est réticulée selon l'un quelconque des procédés connus de l'homme de l'art, tel que par exemple réticulation chimique, réticulation par radiation ionisante assurant l'élimination des monomères résiduels après polymérisation et l'éventuelle formation de radicaux libres sur la matière minérale dispersée dont la présence peut favoriser la création de liaisons internes.

Dans une plus large perspective, l'invention concerne aussi un procédé de préparation de la composition polymère chargée en matière minérale pulvérulente, sous forme granulaire, ayant simultanément une très forte capacité d'absorption et de désorption en eau, une réelle résistance à la photodégradation et une durée de vie importante.

Le procédé selon l'invention comprend les étapes de réalisation suivantes :

a) on réalise d'abord sous agitation un mélange en phase aqueuse d'au moins un monomère éthylénique insaturé disposant d'au moins une fonction X ou Y précitée et on disperse dans le mélange une charge minérale pulvérulente finement divisée,

b) on introduit éventuellement dans la suspension (a) un agent de réticulation chimique et/ou d'autres agents connus,

c) puis on effectue la polymérisation et/ou copolymérisation en présence d'initiateurs et régulateurs connus des monomères précités ou par radiation ionisante,

d) on soumet éventuellement la masse provenant de l'étape (c) à une radiation ionisante pendant un temps suffisant pour provoquer et/ou achever la réticulation du constituant polymère quand l'étape (b) a été réalisée au plus partiellement,

e) on transforme par un moyen connu la masse provenant de l'étape (c) ou de l'étape (d) quand elle a lieu en des particules granulaires,

f) on soumet les particules granulaires à une radiation ionisante pendant un temps suffisant pour provoquer et/ou achever la réticulation du constituant polymère quand l'étape (b) a été réalisée au plus partiellement et l'étape (d) n'a pas été réalisée.

L'étape (c) de polymérisation et/ou copolymérisation, quand elle s'effectue par voie chimique, l'est selon les procédés connus de polymérisation radicalaire, préférentiellement en milieu aqueux et éventuellement en milieu hydroalcoolique des monomères éthyléniques précités, en présence d'initiateurs de polymérisation et/ou copolymérisation tels que les péroxydes et les persels (par exemple l'eau oxygénée, les persulfates) et en présence de régulateurs de polymérisation tels que par exemple des composés organiques à base d'hydroxylamine, de mercaptans.

L'étape (c) de polymérisation et/ou copolymérisation, quand elle s'effectue par voie radiochimique, l'est selon les procédés connus de polymérisation radicalaire au moyen d'une source de radiation ionisante telle que, par exemple, des isotopes radioactifs. Le terme "radiation ionisante", dans le cadre de l'invention, signifie que la radiation pratiquée possède une énergie suffisante pour provoquer la seule excitation électronique et/ou l'ionisation des molécules de polymères et/ou copolymères.

De plus, et selon l'étape (b), il est possible d'introduire dans la suspension résultant de l'étape (a) un agent de réticulation chimique choisi parmi les agents réticulants connus tels que par exemple le méthylène-bis-acrylamide, le tétra-allyle oxyéthane, le méthylol acrylamide.

En pratique et pour la réalisation de l'étape (a), le rapport pondéral du mélange des monomères éthyléniques insaturés et de la phase aqueuse ou hydroalcoolique peut varier entre 80/20 et 20/80 et préférentiellement entre 60/40 et 40/60.

Le milieu de polymérisation et/ou copolymérisation est généralement de l'eau, mais il peut être un mélange d'eau et d'un solvant polaire miscible dans l'eau tel que par exemple,le méthanol, l'éthanol, le propanol, l'isopropanol, les butanols ou encore l'acétone, la méthyléthylcétone...

La composition polymère chargée de matière minérale pulvérulente intimement dispersée au sein de la masse de polymère et/ou copolymère est soumise à une radiation ionisante en vue d'effectuer ou achever la réticulation et de rendre insoluble dans l'eau ledit polymère et/ou copolymère et octroyer à ladite composition selon l'invention les caractéristiques souhaitées.

La radiation ionisante s'effectue, soit avant, soit après la transformation par un moyen connu en particules granulaires de la composition polymère chargée selon l'invention, si elle n'a pas été soumise à une réticulation au cours de l'étape (c) ou si elle n'a été que partiellement réticulée au cours de ladite étape.

Des sources utilisables pour un tel traitement de radiation ionisante consistent en des isotopes radioactifs émettant un rayonnement gamma tel que par exemple $Co^{60}$ et $Cs^{137}$, en des générateurs de rayons X ou encore en des accélérateurs d'électrons générant un rayonnement béta.

Les radiations ionisantes pratiquées dans le cadre de l'invention doivent souhaitablement présenter un niveau d'énergie se situant dans l'intervalle de 0,05 MeV à 5 MeV pour les rayonnements X ou gamma et dans l'intervalle de 0,05 à 10 MeV pour les rayonnements béta.

Le traitement d'irradiation de la composition selon l'invention peut être effectué dans l'air, dans le vide ou dans les atmosphères gazeuses appropriées, selon les méthodes connues et pratiquées par l'homme de l'art.

Ainsi, les compositions à base de polymères et/ou copolymères réticulés chargées en matière minérale

pulvérulente se présentant sous une forme particulaire granulaire selon l'invention sont particulièrement remarquables en raison des qualités exceptionnelles qu'elles développent par comparaison avec les compositions de l'art antérieur.

Parmi ces qualités exceptionnelles peuvent être plus spécialement mentionnées une résistance améliorée à la photodégradation ainsi qu'une substantielle augmentation du nombre de cycles d'absorption et de désorption en eau et une capacité augmentée à absorber de l'eau pour chaque cycle et à la restituer lentement dans des milieux où lesdites compositions sont mises en oeuvre.

L'invention sera mieux comprise grâce aux exemples illustratifs développés ci-après.

Exemple 1

Cet exemple illustre le procédé de préparation selon l'invention de la composition polymère chargée en matière minérale pulvérulente et réticulée per radiation gamma.

Pour ce faire et selon un premier essai (Essai 1), on a introduit dans un réacteur approprié soumis à agitation un mélange d'acide acrylique (70% en poids) et d'acrylamide (30% en poids) représentant 1 kg dilué dans le même poids d'eau. La solution aqueuse ainsi obtenue, maintenue à une température inférieure à 40° C, a été neutralisée par un agent approprié (solution aqueuse d'hydroxyde de sodium) jusqu'à l'obtention d'un pH de 12,5 - 13. Un complément en eau a alors été apporté, de telle manière que la concentration en monomères de la solution aqueuse neutralisée les contenant ne dépasse pas 30% en poids de la masse totale avant d'être soumise à la copolymérisation.

Puis on a finement dispersé la matière minérale pulvérulente dans la solution aqueuse des monomères (0,464 kg d'une argile de charge à faible rendement commercialisée par la société CECA sous la référence FGN-FR) en maintenant une agitation conséquente pendant vingt minutes environ tout en introduisant par barbotage de l'azote dans le milieu.

La suspension ainsi préparée étant maintenue à la température ambiante, on a introduit dans le réacteur de polymérisation et dans l'ordre des catalyseurs de copolymérisation constitués par des solutions aqueuses de persulfate de sodium (à raison de 0,78 gramme de produit sec), métabisulfite de sodium (à raison de 0,39 gramme de produit sec) et de sulfate de fer heptahydraté (à raison de 0,078 gramme de produit sec).

La polymérisation a été immédiate et a donné une masse solide, légèrement élastique, qui a été facilement granulée par passage dans un hachoir industriel de telle manière que la moyenne de leurs dimensions soit comprise entre 2 et 3 millimètres. Les granulés obtenus étaient non collants et, de ce fait, insensibles à une réagglomération.

En pratiquant le même procédé, on a pu préparer d'autres compositions polymères selon l'invention chargées en matière minérale pulvérulente (Essais 2 et 3) dont les formules sont différentes entre elles afin d'illustrer les limites extrêmes de l'objet de l'invention.

Les formules constitutives de chaque composition selon l'invention, exprimées en pour cent en poids, ont été réunies dans le tableau I ci-après.

| ESSAI | 1 | 2 | 3 |
|---|---|---|---|
| Acide Acrylique | 21,00 | 7,40 | 5,00 |
| Acrylamide | 9,00 | 17,30 | 20,00 |
| Argile | 14,00 | 16,50 | 16,50 |
| NaOH de Neutralisation exprimé à 100% | 12,17 | 4,11 | 2,46 |
| Catalyseurs | 0,03 | 0,09 | 0,04 |
| Eau Totale | 43,80 | 54,60 | 56,00 |

Les trois compositions selon l'invention ainsi préparées et granulées ont été déposées sur un support et ont été soumises au rayonnement ionisant provenant d'une source constituée par l'isotope radioactif $Co^{60}$. Le débit moyen était de 0,1 mégarad par heure (un kilogray par heure : kgy).

Les granulés de l'essai 1 ont reçu une dose de 1 kgy et les granulés des essais 2 et 3 une dose de 4,5 kgy. Les granulés ainsi irradiés se sont révélés insolubles dans l'eau.

Exemple 2

Cet exemple illustre également le procédé de préparation selon l'invention de la composition polymère chargée en matière minérale pulvérulente et réticulée par l'action d'un agent chimique.

Dans ce but (Essai 4), on a introduit, dans le même réacteur soumis à agitation que dans l'exemple 1, un mélange d'acide acrylique (70% en poids) et d'acrylamide (30% en poids) représentant 1 kg dilué dans le même poids d'eau.

Puis on y a introduit 300 ppm d'un agent de réticulation chimique constitué par du NN' méthylène-bis-acrylamide.

Le mélange aqueux ainsi obtenu a été traité par une solution aqueuse d'hydroxyde de sodium et porté à un pH de 12,5 - 13 tout en étant maintenu à une température inférieure à 40° C.

Le mélange ainsi neutralisé à été dilué par un nouvel ajout d'eau afin que la concentration en monomères ne dépasse pas 30% en poids de la masse totale du mélange avant copolymérisation.

Puis on a introduit et finement dispersé la matière minérale pulvérulente dans la solution aqueuse des monomères (0,464 kg de bentonite de type montmorillonite à haut rendement commercialisée par la société S.F.B.D. sous la référence BENTONIL C) et maintenu la suspension formée sous agitation conséquente et circulation d'azote par barbotage.

Tout en maintenant la suspension ainsi préparée à la température ambiante, on a introduit dans le réacteur de polymérisation et dans l'ordre, des catalyseurs de copolymérisation constitués par des solutions aqueuses de persulfate de sodium (à raison de 0,78 gramme de produit sec), de métabisulfite de sodium (à raison de 0,39 gramme de produit sec) et de sulfate de fer heptahydraté (à raison de 0,078 gramme de produit sec).

La polymérisation rapide a donné une masse solide qui a été facilement transformée en granulés par passage dans un hachoir industriel. Ces granulés n'avaient aucune tendance à se réagglomérer.

La formule constitutive de la composition, exprimée en pour cent en poids, est présentée dans le tableau II ci-après.

| ESSAI 4 | |
|---|---|
| Acide Acrylique | 21,00 |
| Acrylamide | 9,00 |
| Agent de réticulation | 0,03 |
| Montmorillonite | 14,00 |
| NaOH de neutralisation exprimé à 100% | 12,14 |
| Catalyseurs | 0,03 |
| Eau Totale | 43,80 |

Les granulés ainsi réticulés chimiquement se sont caractérisés, comme pour les granulés de l'exemple 1, par une absence de solubilité dans l'eau.

Exemple 3

Cet exemple illustre le procédé de préparation selon l'invention de la composition polymère chargée en matière minérale pulvérulente polymérisée et réticulée par voie radiochimique.

Dans ce but (Essai 5), on a introduit, dans le même réacteur soumis à agitation que dans l'exemple 1, un mélange d'acide acrylique (70% en poids) et d'acrylamide (30% en poids) représentant 1 kg dilué dans le même poids d'eau.

Le mélange aqueux ainsi obtenu a été traité par une solution aqueuse d'hydroxyde de sodium et porté à un pH de 12,5 - 13 tout en étant maintenu à une température inférieure à 40° C.

Le mélange ainsi neutralisé a été dilué par un nouvel ajout d'eau afin que la concentration en monomères ne dépasse pas 30% en poids de la masse totale du mélange avant copolymérisation.

Puis on a introduit et finement dispersé la matière minérale pulvérulente dans la solution aqueuse des monomères (0,464 kg de montmorillonite à haut rendement) et maintenu la suspension formée sous agitation conséquente.

Tout en maintenant la suspension ainsi préparée à la température ambiante et sous agitation, on a exposé ladite suspension au rayonnement gamma émis par une source de $Co^{60}$.

Le débit de dose était de 1 kgy par heure et la dose totale délivrée de 5 kgy.

L'agitation était arrêtée au bout de 60 minutes d'exposition.

La masse obtenue par polymérisation et réticulation radiochimique a été granulée par passage dans un hachoir industriel.

Les granulés ainsi réticulés se sont caractérisés comme pour les granulés des exemples 1 et 2 par une absence de solubilité dans l'eau.

Exemple 4

Cet exemple a pour but d'illustrer d'une manière comparative avec des compositions polymères de l'art antérieur l'excellent comportement des compositions selon l'invention exposées à un rayonnement ultra-violet de photodégradation.

On a soumis à une irradiation ultra-violette les compositions selon l'invention (Essais 1, 2, 3, 4 et 5) ainsi qu'une composition polymère (Essai 6) ne comportant aucune charge minérale, commercialisée sous la référence AQUASORB A700, et une composition polymère hydrophile, revêtue par malaxage d'une couche protectrice de matière minérale pulvérulente telle qu'elle est décrite dans le brevet français 2 173 934 (Essai 7), ces deux derniers essais constituant l'art antérieur.

Dans ce but, chaque composition polymère a été placée dans une enceinte comportant quatre lampes (à vapeur de mercure) d'une puissance de 15 watts chacune, dont le rayonnement est centré sur 253,7 nanomètres. Le temps d'exposition a été au maximum de 60 heures pour chaque essai, représentant la même dose d'irradiation.

On a obtenu les résultats observés comme indiqués dans le tableau III ci-après exprimant le pourcentage de perte de matière (en poids) en fonction du temps d'exposition.

TABLEAU III

| ESSAIS | % EN POIDS DE PERTE DE MATIERE APRES UN TEMPS D'EXPOSITION (EN HEURE) DE: | | | | |
|---|---|---|---|---|---|
| | 4 h | 6,5 h | 12 h | 35 h | 60 h |
| 1 INV | 13 | 35 | 47 | 80 | 96 |
| 2 INV | 15 | 31 | 40 | 50 | 64 |
| 3 INV | 17 | 35 | 50 | 66 | 80 |
| 4 INV | 10 | 28 | 35 | 41 | 51 |
| 5 INV | 16 | 36 | 50 | 61 | 88 |
| 6 AA | 80 | 100 | | | |
| 7 AA | 13 | 35 | 48 | 76 | 92 |

Exemple 5

Cet exemple poursuit le but d'illustrer par comparaison avec des compositions polymères de l'art antérieur la capacité d'absorber et de désorber de l'eau et l'excellente résistance au vieillissement des compositions selon l'invention quand elles sont soumises à des cycles répétés d'absorption et de désorption en eau.

Pour cela, chaque composition polymère soumise à ce test est d'abord séchée à une température de 60° C pendant un temps de quarante huit heures et pesée. Puis ladite composition séchée est immergée dans de l'eau distillée pendant un temps de dix heures, pesée afin de connaître la quantité d'eau absorbée et enfin séchée dans les mêmes conditions que celles précitées et pesée.

On a pu ainsi exprimer un taux d'absorption (ou de gonflement) et de désorption pour chaque composition polymère en faisant usage de la relation suivante :

$$\text{Taux d'absorption} = \left( \frac{\left(\begin{array}{l}\text{Poids de la composition}\\ \text{après absorption}\end{array}\right) - \left(\begin{array}{l}\text{Poids sec de la composition}\\ \text{avant absorption}\end{array}\right)}{\text{Poids sec de la composition avant absorption}} \right)$$

Chaque composition polymère, qu'elle appartienne à l'invention ou à l'art antérieur, a subi cinq cycles d'absorption et de désorption en eau.

Dès lors, entre chaque cycle, il a été possible de déterminer un taux de perte en matière exprimant une fatigue de la composition polymère testée ou un affaiblissement des caractéristiques par un vieillissement précoce.

Le taux de perte en matière a été exprimé par la relation suivante :

$$\text{Perte matière en \%} = \left( \frac{\left(\begin{array}{l}\text{Poids sec de la composition}\\ \text{avant absorption}\end{array}\right) - \left(\begin{array}{l}\text{Poids sec de la composition}\\ \text{après absorption}\end{array}\right)}{\text{Poids sec de la composition avant absorption}} \right) \times 100$$

Les compositions polymères correspondant aux essais 1, 2, 3, 4 et 7 ont été soumises au test des cycles d'absorption et de désorption en eau dont tous les résultats relatifs au taux d'absorption et au taux de perte de matière ont été réunis dans le tableau IV ci-après.

TABLEAU IV

| ESSAIS | RANG DU CYCLE | 1 INV | 2 INV | 3 INV | 4 INV | 7 AA |
|---|---|---|---|---|---|---|
| ABSORPTION EN POIDS | 1 er | 300 | 219 | 242 | 150 | 129 |
| PERTE EN MATIERE EN % EN POIDS | | 0 | 0 | 0 | 0 | 0 |
| ABSORPTION EN POIDS | 2 e | 303 | 219 | 220 | 152 | 152 |
| PERTE EN MATIERE EN % EN POIDS | | 9,6 | 1,6 | 1,1 | 1,6 | 36,8 |
| ABSORPTION EN POIDS | 3 e | 385 | 229 | 246 | 157 | 163 |
| PERTE EN MATIERE EN % EN POIDS | | 15,1 | 3 | 4,2 | 3,0 | 37,8 |
| ABSORPTION EN POIDS | 4 e | 374 | 224 | 253 | 150 | 159 |
| PERTE EN MATIERE EN % EN POIDS | | 19 | 4,4 | 5,7 | 4,0 | 41,6 |
| ABSORPTION EN POIDS | 5 e | 370 | 219 | 252 | 143 | 149 |
| PERTE EN MATIERE EN % EN POIDS | | 22,3 | 5,3 | 8,3 | 5,1 | 44,5 |

Ainsi, comme le révèle ce tableau, les compositions selon l'invention ont des taux d'absorption (ou de gonflement) en eau en moyenne très supérieurs et, dans le cas le plus défavorable, équivalent à celui de l'art antérieur.

De plus, les compositions selon l'invention sont infiniment moins sensibles aux cycles répétés de l'absorption - désorption, cette moindre sensibilité se manifestant par une perte en matière (exprimée en pour cent en poids cumulé) après cinq cycles infiniment plus faible (entre 5,1% et 22,3%) que pour la composition de l'art antérieur (44,5%).

**Revendications**

1) Composition polymère se présentant sous une forme granulaire ayant la capacité d'absorber et de désorber de l'eau, comportant pour une part une matière polymère réticulée insoluble mais gonflable dans l'eau et pour l'autre part au moins une charge minérale pulvérulente, bien dispersée et intimement liée, caractérisée en ce que, dans le but d'augmenter sa capacité d'absorption et de désorption en eau, sa résistance à la photodégradation et sa durée de vie, elle se compose :

a) d'au moins un polymère et/ou copolymère préparé à partir d'au moins un monomère éthylénique insaturé disposant d'au moins une fonction carboxylique amide, sulfurique, sulfonique, phosphorique, phosphonique, hydroxyle,

b) d'au moins une charge minérale intimement dispersée au sein dudit polymère et/ou copolymère grâce à son introduction dans le mélange de monomères de même nature ou de nature différente avant leur polymérisation.

2) Composition polymère se présentant sous une forme granulaire ayant la capacité d'absorber et de désorber de l'eau selon la revendication 1, caractérisée en ce que le polymère et/ou copolymère répond à la formule générale :

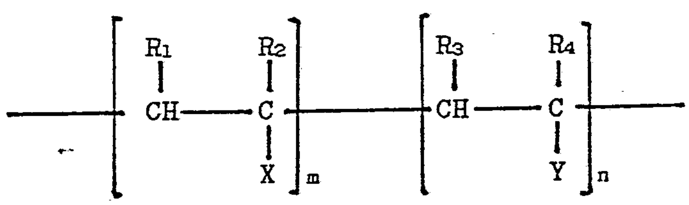

dans laquelle X et Y sont différents ou identiques et sont l'une des fonctions $-COOH$, $-CONH_2$, $-O-SO_3H$, $-SO_3H$, $-O-PO_3H_2$, $-PO_3H_2$, $-OH$ tandis que les indices m et n exprimés en pour cent en poids sont choisis dans les intervalles $0 \leqq m \leqq 100$ et $100 \leqq n \leqq 0$, que les radicaux $R_1$ et $R_3$ sont choisis dans le groupe constitué par $-H$, $-OH$, $-COOH$, et les alkyles substitués ou non et que les radicaux $R_2$ et $R_4$ le sont dans le groupe constitué par $-H$, $-COOH$, $-CO-NH_2$, $-O-SO_3H$, $-SO_3H$, $-O-PO_3H_2$, $-PO_3H_2$, $-OH$ et les alkyles substitués ou non.

3) Composition polymère se présentant sous une forme granulaire ayant la capacité d'absorber et de désorber de l'eau selon la revendication 2, caractérisée en ce que les radicaux $R_1$, $R_2$, $R_3$ et $R_4$, quand ils sont des alkyles substitués ou non, sont préférentiellement choisis parmi ceux ayant 1 à 4 atomes de carbone.

4) Composition polymère se présentant sous une forme granulaire ayant la capacité d'absorber et de désorber de l'eau selon l'une quelconque des revendications 1 à 3, caractérisée en ce que le polymère et/ou copolymère est préparé à partir de l'un au moins des monomères appartenant au groupe constitué par les acides acrylique, méthacrylique, itaconique, crotonique, isocrotonique, aconitique, fumarique, mésaconique, sinapique, undécylénique, angélique, hydroxyacrylique, anhydride maléïque, l'acrylamide, le méthacrylamide, l'acide acrylamidopropane sulfonique, l'éther vinylique, l'acide vinyl sulfonique, l'alcool vinylique, l'acide styrène sulfonique, les acrylates et méthacrylates d'alkyles, acrylates et méthacrylates d'hydroxyalkyles, les esters phosphoriques d'acrylate ou méthacrylate hydroxylés tels que le phosphate de méthacrylate d'éthylène glycol, les esters sulfuriques d'acrylate ou méthacrylate hydroxylés.

5) Composition polymère se présentant sous une forme granulaire ayant la capacité d'absorber et de désorber de l'eau selon l'une quelconque des revendications 1 à 4, caractérisée en ce que les fonctions acides du polymère et/ou copolymère sont salifiées.

6) Composition polymère se présentant sous une forme granulaire ayant la capacité d'absorber et de désorber de l'eau selon l'une quelconque des revendications 1 à 5, caractérisée en ce que la charge minérale intimement dispersée au sein dudit polymère et/ou copolymère est choisie parmi les composés argileux susceptibles de former une suspension plastique stable au contact de l'eau et appartenant au groupe constitué par les kaolinites, le groupe des micas, les illites et la glauconite, le groupe des

montmorillonites, le groupe des chlorites, le groupe des vermiculites, le groupe des argiles interstratifiées dont la structure unitaire est une combinaison des groupes précédents, le groupe des argiles fibreuses.

7) Composition polymère se présentant sous une forme granulaire ayant la capacité d'absorber et de désorber de l'eau selon la revendication 6, caractérisée en ce que la charge minérale peut contenir d'autres composés minéraux appartenant au groupe constitué par le quartz, la calcite, la dolomie, le gypse, la limonite ($FeO(OH)_nH_2O$) et d'autres oxydes et hydroxydes métalliques.

8) Composition polymère se présentant sous une forme granulaire ayant la capacité d'absorber et de désorber de l'eau selon l'une quelconque des revendications 1 à 7, caractérisée en ce que la charge minérale intimement dispersée au sein du polymère et/ou copolymère est présente dans la composition dans le rapport pondéral : charge minérale / mélange de monomères (exprimé en sec) variant de 10/90 à 90/10 et préférentiellement de 50/50 à 20/80.

9) Composition polymère se présentant sous une forme granulaire ayant la capacité d'absorber et de désorber de l'eau selon l'une quelconque des revendications 1 à 8, caractérisée en ce qu'elle contient en outre l'un au moins des agents favorisant la réticulation chimique, des agents de stabilisation aux rayonnements ultra-violets, des dispersants, des colorants, des pigments, des agents biocides, des agents de conditionnement ou de mise en état des sols.

10) Procédé d'obtention de la composition polymère selon l'une quelconque des revendications 1 à 9, caractérisé en ce que :

a) on réalise d'abord sous agitation un mélange en phase aqueuse d'au moins un monomère éthylénique insaturé disposant d'au moins une fonction X ou Y précitée et on disperse dans le mélange une charge minérale pulvérulente finement divisée,

b) on introduit éventuellement dans la suspension (a) un agent de réticulation chimique et/ou d'autres agents connus,

c) puis on effectue la polymérisation et/ou copolymérisation en présence d'initiateurs et régulateurs connus des monomères précités ou par radiation ionisante,

d) on soumet éventuellement la masse provenant de l'étape (c) à une radiation ionisante pendant un temps suffisant pour provoquer et/ou achever la réticulation du constituant polymère quand l'étape (b) a été réalisée au plus partiellement,

e) on transforme par un moyen connu la masse provenant de l'étape (c) ou de l'étape (d), quand elle a lieu, en des particules granulaires,

f) on soumet les particules granulaires à une radiation ionisante pendant un temps suffisant pour provoquer et/ou achever la réticulation du constituant polymère quand l'étape (b) a été réalisée au plus partiellement et l'étape (d) n'a pas été réalisée.

11. Procédé d'obtention de la composition polymère selon la revendication 10, caractérisé en ce que l'étape (c) de polymérisation et/ou copolymérisation, quand elle s'effectue par voie chimique, l'est selon les procédés connus de polymérisation radicalaire, préférentiellement en milieu aqueux et éventuellement en milieu hydro-alcoolique des monomères éthyléniques, en présence d'initiateurs de polymérisation et/ou copolymérisation connus et préférentiellement les péroxydes et les persels et en présence de régulateurs de polymérisation connus, préférentiellement des composés organiques à base d'hydroxylamine, de mercaptans.

12) Procédé d'obtention de la composition polymère selon la revendication 10, caractérisé en ce que l'étape (c) de polymérisation et/ou copolymérisation, quand elle s'effectue par voie radiochimique, l'est selon les procédés connus de polymérisation radicalaire, au moyen d'une source de radiation ionisante telle que des isotopes radioactifs.

13) Procédé d'obtention de la composition polymère selon la revendication 10, caractérisé en ce que, selon l'étape (b), on introduit dans la suspension résultant de l'étape (a) un agent de réticulation chimique choisi parmi les agents réticulants connus, en particulier le méthylène-bis-acrylamide, le tétra-allyle oxyéthane, le méthylol acrylamide.

14) Procédé d'obtention de la composition polymère selon la revendication 1, caractérisé en ce que, pour la réalisation de l'étape (a), le rapport pondéral du mélange des monomères éthyléniques insaturés et de la phase aqueuse ou hydro-alcoolique varie entre 80/20 et 20/80 et préférentiellement entre 60/40 et 40/60.

15) Procédé d'obtention de la composition polymère selon la revendication 10, caractérisé en ce que le traitement de radiation ionisante s'effectue au moyen d'une source choisie dans le groupe constitué par les isotopes radioactifs émettant un rayonnement gamma, les générateurs de rayons X, les accélérateurs d'électrons générant un rayonnement béta.

16) Procédé d'obtention de la composition polymère selon la revendication 15, caractérisé en ce que les radiations ionisantes présentent souhaitablement un niveau d'énergie se situant dans l'intervalle de 0,05 MeV à 5 MeV pour les rayonnements X ou gamma et dans l'intervalle de 0,05 à 10 MeV pour les rayonnements béta.

17) Procédé d'obtention de la composition polymère selon l'une quelconque des revendications 10 à 16, caractérisé en ce que le traitement d'irradiation est effectué dans l'air, dans le vide ou dans les atmosphères gazeuses appropriées, selon les méthodes connues.